# EUROPEAN PATENT SPECIFICATION

(11) **EP 3 799 202 B1**
(45) Date of publication and mention of the grant of the patent: **23.11.2022**
(21) Application number: 20157209.6
(22) Date of filing: 13.02.2020
(51) Int. Cl.: H01Q 1/24, H01Q 1/42, H01Q 5/35, H01Q 1/52

(54) **MOBILE TERMINAL**
MOBILES ENDGERÄT
TERMINAL MOBILE

(30) Priority: 24.09.2019 CN 201910904947
(43) Date of publication of application: 31.03.2021
(73) Proprietor: Beijing Xiaomi Mobile Software Co., Ltd., Beijing 100085 (CN)
(72) Inventor: YUE, Yongbo, Beijing, Beijing 100085 (CN); XUE, Zonglin, Beijing, Beijing 100085 (CN); ZHANG, Jie, Beijing, Beijing 100085 (CN)
(74) Representative: dompatent von Kreisler Selting Werner - Partnerschaft von Patent- und Rechtsanwälten mbB

(56) References cited:
- US-A1- 2014 078 008
- US-A1- 2014 145 886
- US-A1- 2017 250 460

## Description

### TECHNICAL FIELD

The present invention generally relates to the technical field of mobile communication, and more particularly, to an antenna and a mobile terminal.

### BACKGROUND

Along with the increasing requirements of users on mobile communication devices and vigorous development of communication technologies, technical requirements for mobile communication devices have also become more sophisticated. Especially in terms of mobile communication technologies, the conventional 2G technologies have been developed to the current 5G technologies. With the development of 5G technologies, the requirements for antennas have increased.

A conventional mobile communication device, for example, a mobile phone, is provided with a slot antenna. In order to arrange the slot antenna, slots need to be formed at the bottom of the mobile communication device, so that the antenna can achieve radiation performance. However, because the slots are formed at the bottom of the mobile communication device, a slot is formed at the bottom of the mobile communication device, so that the metal area is discontinuous. and the appearance of the mobile communication device can also be affected. At the same time, in order to prevent the metal structure from shielding the electromagnetic waves of the antenna and to ensure the signal receiving sensitivity of the antenna, the appearance of the mobile communication device may have to be sacrificed to ensure the performance of the antenna.

US 2014/078008 A1 discloses a terminal body, a first antenna and a second antenna at one side of the terminal body to operate at different frequency bands. The first antenna and the second antenna are provided with conductive members each having a slit at one side thereof, and the conductive members form part of an appearance of the terminal body.

US 2017/250460 A1 discloses a mobile terminal with a metal plate having an end plate with slots and side walls with slots with a function of an antenna.

US 2014/145886 A1 discloses a terminal including a first frame body and a second frame body. The first frame body is used for an antenna unit of the terminal and a gap is set in a first partial area of the first frame body with the first partial area with a gap being set is covered by the second frame body.

### SUMMARY

In order to overcome the problems in relevant technology, the present invention provides a mobile terminal according to independent claims 1 and 6.

In one embodiment, a first grounding point is formed on the two side wall plates respectively.

In one embodiment, the slot is formed between the first grounding point and a connecting end of the side wall plate with the end plate.

In one embodiment, the slot is arranged away from the first grounding point relative to a connecting end of the side wall plate and the end plate.

In one embodiment, the distance between the metal area of the panel and the end plate of the antenna is less than or equal to 1mm.

In one embodiment, the distance between the metal area of the panel and the end plate of the antenna is less than or equal to 0.8mm.

In one embodiment, the mobile terminal further includes: a circuit board which is grounded through a second grounding point, and a card holder is disposed between the circuit board and the panel and arranged close to the circuit board.

In one embodiment, a three-direction elastic plate type spacer includes a first elastic plate extended along a first direction, a second elastic plate extended along a second direction different from the first direction, and a third elastic plate extended along a third direction different from the second direction; and the first elastic plate, the second elastic plate and the third elastic plate are respectively connected to one of the end plate of the antenna, the card holder of the mobile terminal, and the metal area of the panel of the antenna.

In one embodiment, the three-direction elastic plate type spacer includes a first elastic plate extended along a first direction, a second elastic plate extended along a second direction different from the first direction, and a third elastic plate extended along a third direction different from the second direction; and an angle formed by the first elastic plate and the second elastic plate is different from an angle formed by the second elastic plate and the third elastic plate.

In one embodiment, a spacer of the antenna includes a first elastic plate, a second elastic plate and a third elastic plate which are sequentially connected; preset angles are formed respectively between the first elastic plate and the second elastic plate and between the second elastic plate and the third elastic plate; the first elastic plate is connected with the end plate of the antenna; the second elastic plate is connected with the metal area of the panel; and the third elastic plate is connected with a card holder of the mobile terminal.

In one embodiment, the angle between the first elastic plate and the second elastic plate is an obtuse angle; and the angle between the second elastic plate and the third elastic plate is an acute angle.

In one embodiment, the metal area is electrically connected with the first grounding point of the antenna through conductive silicone adhesive or conductive foam; and the circuit board of the mobile terminal is electrically connected with a second grounding point through a grounding elastic sheet.

The technical proposals of the embodiments of the present invention may have the following advantages:

in the antenna and the mobile terminal according to the embodiments of the present invention, the slot cannot be observed when viewed from the outside, thereby achieving a very beautiful appearance, meeting user requirements, and improving the user experience.It should be understood that the above general description and the following detailed description are exemplary and explanatory, and should not limit the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is an exploded view for illustrating an antenna according to an exemplary embodiment of the present invention;
FIG. 2 is a top view for illustrating the antenna according to the exemplary embodiment of the present invention;
FIG. 3 is a top view for illustrating an antenna according to another exemplary embodiment of the present invention;
FIG. 4 is a cross-sectional view of the antenna along line A-A in FIG. 2 according to the exemplary embodiment of the present invention; and
FIG. 5 is cross-sectional view of the antenna along line B-B in FIG. 2 according to the exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The antenna according to the embodiment of the present invention can be applied to various mobile communication devices such as mobile phones, radios, and tablet computers. In the description of the following embodiments, description is given only by taking the mobile phone as an example, but the present invention is not limited thereto.

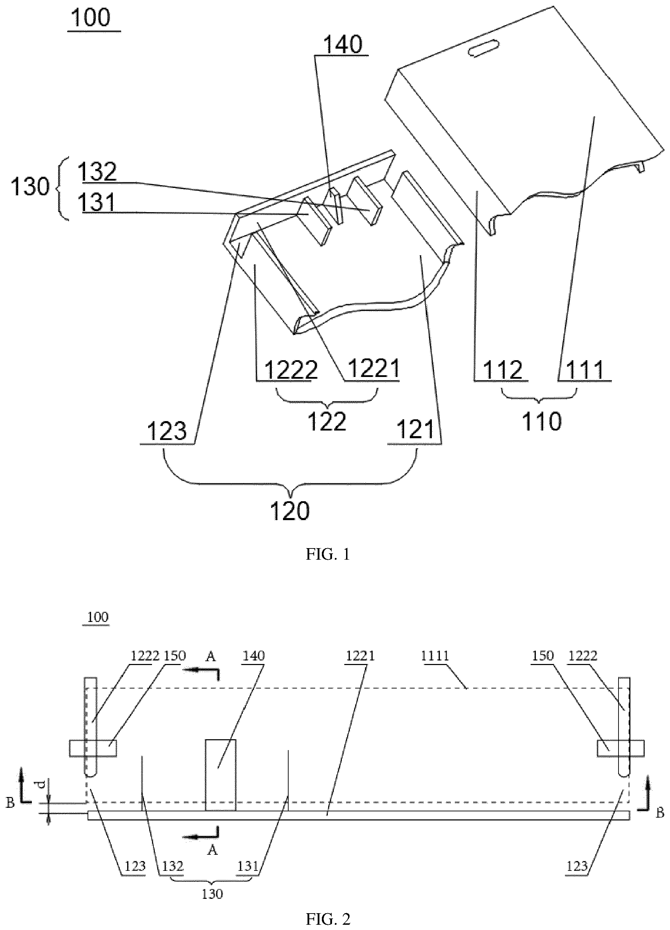

FIG. 1 is an exploded view for illustrating an antenna according to an exemplary embodiment of the present invention. FIG. 2 is a top view for illustrating the antenna according to the exemplary embodiment of the present invention.

Referring to FIGS. 1 and 2, there is provided an antenna 100 according to an exemplary embodiment of the present invention, comprising a feed 130, a first member 122 and a second member 112.

In the exemplary embodiment of the present invention, the feed 130 may include a first feed element 131 and a second feed element 132.

The first member 122 is made of metal materials and may be a radiator of the antenna 100. In the exemplary embodiment of the present invention, the first member 122 may include an end plate 1221 and side wall plates 1222 respectively perpendicular to both ends of the end plate 1221. The first feed element 131 and the second feed element 132 of the feed 130 are respectively disposed on the end plate 1221 of the first member 122. The first feed element 131 and the second feed element 132 of the feed 130 are disposed between two side wall plates 1222.

In the exemplary embodiment of the present invention, a slot 123 is formed on at least one side wall plate of the first member. In one embodiment, one slot 123 may be respectively formed on each of the two side wall plates 1222. That is to say, the slot 123 is respectively formed on both sides of the feed 130. As long as the slot 123 is formed on both sides of the feed 130, the position of the slot 123 on the side wall plate 1222 is not limited. For example, referring to FIGS. 1 and 2, the slot 123 may be formed at a position of the side wall plate 1222 close to the end plate 1221, namely the slot 123 may be formed at an end portion of the side wall plate 1222 connected with the end plate 1221.

In the exemplary embodiment of the present invention, the second member 112 is made of non-metallic materials. The shape of the second member 112 may be adapted to the shape of the first member 122, so as to be bonded to the first member 122. When the second members 112 are bonded to the first member 122, the second members 112 may shield the two slots 123.

As long as the second member 112 can shield the slot 123, the structure of the second member is not specifically limited. For example, in the exemplary embodiment of the present invention, the second members 112 may be disposed on two sides of a housing 110 (described later) of a mobile phone, or may be integrally formed with the housing 110 of the mobile phone. When the housing 110 of the mobile phone is mounted on the mobile phone, the second members 112 disposed on both sides of the housing 110 may shield the slots 123.

The above structure forms the antenna 110 according to one embodiment of the present invention. The feed 130 of the antenna 100 is connected with the first member 122 made of the metallic materials to realize the functions of the antenna 100. Two slots 123 are formed at two ends of the feed 130 of the first member 122, and the feed 130 is configured to radiate electromagnetic waves to the outside through the two slots 123.

In the embodiment, the antenna 100 is provided with the second members 112 which are bonded to the first member 122 at least at the slots 123 to shield the slots 123 from the outside, so as to change the appearance of the mobile phone equipped with the slot antenna 100. The second member 112 is made of non-metallic materials, without shielding the electromagnetic waves of the feed 130 and without affecting the antenna function of the feed 130. The second member may be made of polyimide (PI), glass or other non-metallic materials.

In the antenna 100 according to the embodiment of the present invention, when the mobile phone equipped with the antenna 100 is viewed from the outside, two slots existing in the conventional arts cannot be seen, and there is no poor appearance caused by any discontinuity in the metal housing due to two different materials. That is to say, in the antenna 100 according to the embodiment of the present invention, the slots 123 cannot be observed when observed from the outside, so as to achieve a very beautiful appearance, satisfy user requirements, and improve user experience. In the conventional art, the appearance of the mobile phone has to be sacrificed to ensure the sensitivity of the signal reception of the antenna. However, the antenna 100 according to the embodiment of the present invention not only ensures the signal receiving sensitivity of the antenna 100 without sacrificing the appearance of the mobile phone but also improves the freedom in the appearance design of the mobile phone, and meanwhile, also realizes good signal transmission.

In an embodiment of the present invention, a spacer 140 is disposed between the first feed element 131 and the second feed element 132 of the feed 130.

As described above, the feed 130 includes the first feed element 131 and the second feed element 132. The two feed elements are arranged to receive communication signals in different frequency bands to realize multi-band signal transmitting and receiving function. In the embodiment, the first feed element 131 is configured to receive low frequency and sub6GHz signals, and the second feed element 132 is configured to receive 2G, 3G and 4G medium and high frequency signals. The arrangement of the spacer 140 between the first feed element 131 and the second feed element 132 avoids the mutual signal interference between the first feed element 131 and the second feed element 132 and then ensures that the antenna 100 can receive the communication signals.

In general, other electronic components, such as USBs, loudspeakers, cameras, and the like, are also disposed near the feed 130. The arrangement of more than two feed elements may realize multi-band signal antenna. In the case of only arranging one feed element, there are problems such as incompatibility with sub6GHz signals. In the case of arranging a plurality of feed elements, the spacer must also be disposed between the feed elements to avoid the signal interference between two feed elements. However, as described above, other electronic components are also disposed near the feed 130, and the design space of the feed 130 is very limited. In the embodiment, the two slots 123 are respectively formed on the side wall plates 1222 on both sides to release a conventional space in which the slots 123 are formed on the end plate 1221, namely increasing a space in which other electronic components are mounted on the end plate 1221. In the case of arranging two feed elements on the end plate 1221, multi-band feed function can be realized.

In one embodiment, referring to FIG. 2, a first grounding point 150 is formed on the two side wall plates 1222 respectively .

In one embodiment, referring to FIG. 2, the slot 123 is formed between the first grounding point 150 and a connecting end of the side wall plate 1222 with the end plate 1221.

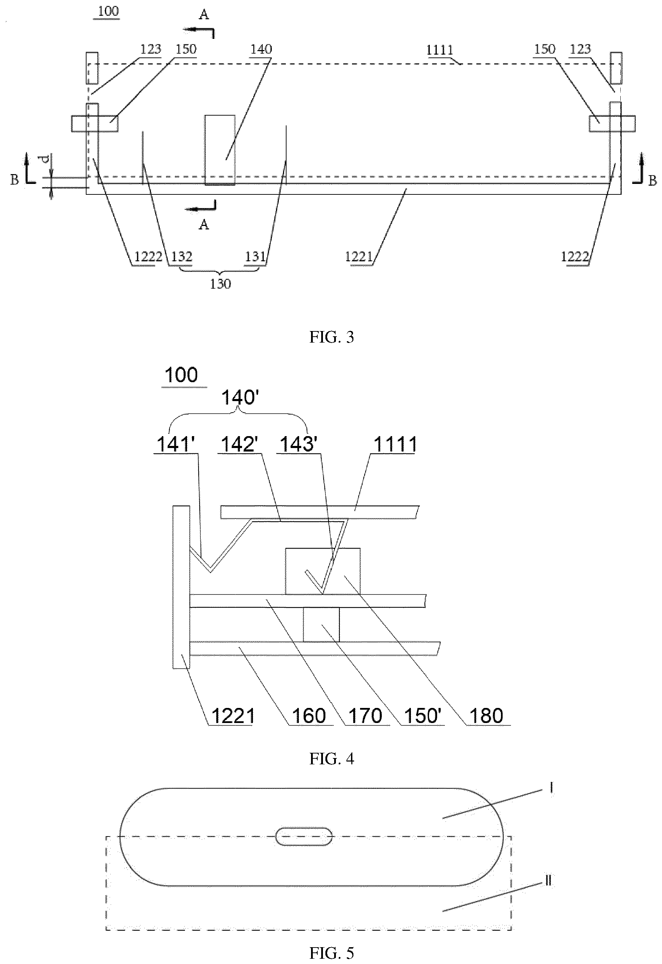

FIG. 3 is a top view for illustrating an antenna 100 according to another exemplary embodiment of the present invention.

Referring to FIG. 3, in the embodiment, the slot 123 is arranged away from the first grounding point 150 relative to the connecting end of the side wall plate 1222 and the end plate 1221. That is, at another end of the side wall plate 1222 relative to the connecting end of the side wall plate 1222 and the end plate 1221, the slot 123 is formed between another end of the side wall plate 1222 and the first grounding point 150.

As described above, as long as the slots 123 are formed on both sides of the feed 130, the position of the slot 123 on the side wall plate 1222 is not limited. That is to say, the position of the slot 123 on the side wall plate 1222 may be determined according to actual conditions. The slot 123 may be formed between the first grounding point 150 and the end plate 1221 and is close to the feed 130, thereby facilitating the electromagnetic radiation of the feed 130. As long as the electromagnetic radiation of the feed 130 is not affected, the slots 123 may also be formed at positions away from the end plate 1221.

According to another aspect of embodiments of the present invention, there is provided a mobile terminal, comprising: an antenna 100 and a housing. The antenna 100 is the antenna 100 according to the first aspect and any foregoing embodiment. Referring to FIG. 1, the housing includes an upper housing 110 and a lower housing 120. The lower housing 120 includes a bottom plate 121 and a first member 122 connected with the bottom plate 121. The upper housing 110 includes a panel 111. The second member 112 may be the panel 111 or may also be integrally formed by bending an edge portion of the panel. In order to increase the screen-to-body ratio, a display panel of the mobile terminal may be set to be a cylinder that is bent by the panel with opening at two ends. The panel 111 includes a metal area 1111.

In the mobile terminal with the above structure, the upper housing 110 is covered and fastened to the lower housing 120, and the second member 112 of the upper housing 110 is bent by the panel 111 to form an integral structure. The first member 122 of the lower housing 120 may also be bent by the bottom plate 121.

Currently, users have high requirement on the appearance of the mobile phone and like metal appearance. Meanwhile, the antenna 100 needs to be connected with a first frame (i.e. the first member) 122 made of metal. Accordingly, the lower housing 120 provided with the bottom plate 121 and the first frame 122 is formed by bending the bottom plate 121, which facilitates the manufacturing process. In addition, in pursuit of a lightweight housing, the bottom plate 121 may be made of non-metallic materials, and the first frame 122 made of metallic materials may be connected with the bottom plate 121 by riveting, welding, and the like.

The mobile terminal, such as the mobile phone, generally adopts a slot antenna. As the two slots formed on a bottom frame of the mobile phone are blocked by components made of non-metallic materials, such as plastics, the appearance is improved to some extent, but the slots can still be clearly seen due to color and other reasons. However, in the mobile terminal in the embodiment, a second frame (the second member) 112 is fastened from the outside of the first frame 122 to realize shielding the lower housing 120 by the upper housing 110 and shielding the two slots 123 formed on the first frame 122, so that the slots 123 cannot be observed from the outside. Therefore, the appearance of the mobile phone provided with the slots 123 is improved.

In the antenna 100 and the mobile terminal according to the embodiment of the present invention, the slots 123 cannot be observed when viewed from the outside, so as to realize a very beautiful appearance, increase the design space of the appearance of the mobile phone, satisfy the appearance requirement of users, and improve user experience.

In one embodiment, the spacer 140 is a ribbed plate connected between the end plate 1221 and the bottom plate 121.

In the process of manufacturing the housing, especially a housing in which the bottom plate 121 and the first frame 122 are separable structure, the ribbed plate is usually disposed between the first frame 122 and the bottom plate 121 in order to increase the strength of the housing. As the ribbed plate is taken as the spacer 140 between the two feed elements, the internal space of the housing 120 is effectively saved. Other components are not required to be additionally arranged, so the production cost is reduced.

In one embodiment, the spacer 140 taken as the ribbed plate may be made of non-metallic materials.

The ribbed plate made of non-metallic materials as the spacer 140 can effectively avoid the signal interference between the two feed elements and realize the function of the multi-band signal antenna. The spacer 140 with the above structure realizes the isolation from -6 dB to -7dB.

FIG. 4 is a cross-sectional view of the antenna along line A-A in FIG. 2 according to the exemplary embodiment of the present invention. FIG. 5 is a cross-sectional view of the antenna along line B-B in FIG. 2 according to the exemplary embodiment of the present invention.

In one embodiment, referring to FIGS. 4 and 5, the mobile phone further includes a circuit board 170 grounded through a second grounding point 150' and a card holder 180 which is disposed between the circuit board 170 and the panel 111 and close to the circuit board 170 .

In the mobile terminal, for example, the mobile phone must be provided with the card holder 180 for fixing a communication card. The card holder 180 is arranged on the circuit board 170 so that a magnetic card of the communication card can contact the circuit of the circuit board 170 to realize communication function. The circuit board 170 is grounded through the second grounding point 150' to realize the grounding of the circuit of the circuit board and the communication card.

In one embodiment, the distance between the metal area 1111 and the end plate 1221 is less than or equal to 1 mm or less than or equal to 0.8 mm.

The spacing distance d (shown in FIG. 2) between the metal area 1111 on the panel 111 and the end plate 1221 may be less than or equal to 1 mm, so a narrow space is formed to be a clear space of the antenna 100. In the embodiment, distance d may be less than or equal to 0.8 mm.

Referring to FIG. 5, the solid portion in the B-B cross-section is a metal part I, the dotted portion is a non-metal part II; and an overlap part of the metal part I and the non-metal part II occupies about 50% of the metal part I, so the area of the non-metal part is reduced. The distance d shown in FIG. 4 and a space of the non-metal part II shown in FIG. 5 not occupied by the metal part I, form a stereo clear area of the antenna. This part of stereo clear area is very small and contributes for the improvement of the screen-to-body ratio of the mobile terminal such as the mobile phone.

In one embodiment, a spacer 140' includes a first elastic plate 141', a second elastic plate 142' and a third elastic plate 143' which are sequentially connected. Preset angles are formed among the first elastic plate 141', the second elastic plate 142' and the third elastic plate 143'. For example, the angle between the first elastic plate and the second elastic plate is an obtuse angle; and the angle between the second elastic plate and the third elastic plate is an acute angle. The first elastic plate 141' is connected with the end plate 1221, the second elastic plate 142' is connected with the metal area 1111 of the panel 111, and the third elastic plate 143' is connected with the card holder 180. The first elastic plate 141', the second elastic plate 142' and the third elastic plate 143' form a three-direction elastic plate. As long as the three-direction elastic plate can be formed, the preset angle between every two elastic plates is not limited and may be designed according to the design space of the mobile phone.

For example, in one embodiment, the first elastic plate 141' may be formed by a first-direction elastic plate extended along a first direction and a second-direction elastic plate extended along a second direction different from the first direction. An intersecting angle of the first direction and the second direction is not limited. For example, the intersecting angle of the first direction and the second direction may be from 10 degrees to 160 degrees, from 30 degrees to 120 degrees, or from 45 degrees to 100 degrees. The setting of the intersecting angle of the first direction and the second direction as described above can more effectively realize the grounding return of the feed 130 connected with the end plate 1221 as soon as possible.

For example, in one embodiment, the second-direction elastic plate of the first elastic plate 141' is connected with the second elastic plate 142'. The second elastic plate 142' is extended along a third direction different from the second direction. The angle formed by the second-direction elastic plate of the first elastic plate 141' and the second elastic plate 142' is not limited and may be designed according to the design space of the mobile phone. The angle formed by the second-direction elastic plate of the first elastic plate 141' and the second elastic plate 142' may be from 10 degrees to 160 degrees, from 30 degrees to 120 degrees, or from 45 degrees to 100 degrees.

For example, in one embodiment, the third elastic plate 143' is formed by a fourth-direction elastic plate extended along a fourth direction and a fifth-direction elastic plate extended along a fifth direction different from the fourth direction. The intersecting angle of the fourth direction and the fifth direction is not limited. The angle formed by the fourth direction and the fifth direction may be from 10 degrees to 160 degrees, from 30 degrees to 120 degrees, or from 45 degrees to 100 degrees.

For example, in one embodiment, the second elastic plate 142' may be connected with the fourth-direction elastic plate of the third elastic plate 143'. The angle formed by the second elastic plate 142' and the fourth-direction elastic plate of the third elastic plate 143' is not limited and may be designed according to the design space of the mobile phone. The angle formed by the fourth-direction elastic plate of the third elastic plate 143' and the second elastic plate 142' may be from 10 degrees to 160 degrees, from 30 degrees to 120 degrees, or from 45 degrees to 100 degrees.

In the exemplary embodiment of the present invention, the structure of the three-direction elastic plate type spacer 140' is not limited to that defined in the embodiment. The three-direction elastic plate type spacer 140' in the present invention indicates that it is provided with at least three directions elastic plates which can be respectively connected with the end plate 1221, the metal area 1111 and the card holder 180. Thus, the structure of the three-direction elastic plate type spacer 140' is not limited to elastic plates with only three directions. As described above, the three-direction elastic plate type spacer 140' may include five elastic plates in different directions, namely may include elastic plates in more than three different directions.

For example, in another embodiment, the first elastic plate 141' is connected with the end plate 1221, the second elastic plate 142' is connected with the card holder 180, and the third elastic plate 143' is connected with the metal area 1111 of the panel 111.

The three-direction elastic plate type spacer 140' is not specifically limited as long as it can be connected to the end plate 1221, the card holder 180 and the metal area 1111 of the panel 111.

In the embodiment, the spacer 140' adopts three-direction elastic plate structure. As the first elastic plate 141' is connected with the end plate 1221, the second elastic plate 142' is connected with the metal area 1111 of the panel 111 and the third elastic plate 143' is connected with the card holder 180, the feed 130 connected with the end plate 1221 realizes grounding return as soon as possible. The three-direction elastic plate type spacer 140' improves the isolation effect between the first feed element 131 and the second feed element 132 of the feed 130. The isolation of the first feed element 131 and the second feed element 132 can reach more than -10dB while ensuring good contact between the first and second feed element 131 and 132 and the end plate 1221.

In one embodiment, the metal area 1111 is electrically connected with a first grounding point 150 through conductive silicone adhesive or conductive foam. The circuit board 170 is electrically connected with a second grounding point 150' through a grounding elastic sheet.

As an embodiment of the mobile terminal, taking a mobile phone as an example, the mobile phone is a full screen phone with very high screen-to-body ratio. A display screen of the mobile phone may include a panel 111 of an upper housing 110. An edge portion of the display screen is bent to form a second frame (i.e. the second member)112, and at least the second frame 112 is made of non-metallic materials.

A lower housing 120 of the mobile phone is composed of a bottom plate 121 and a first frame (i.e. the first member) 122, and at least the first frame 122 is made of metallic materials. The end plate 1221 of the first frame 122 is a bottom frame provided with a microphone, and a first feed element 131 and a second feed element 132 are connected to an inner side surface of the bottom frame. The first feed element 131 is configured to receive low frequency and sub6GHz signals, and the second feed element 132 is configured to receive medium and high frequency signals of 2G, 3G, 4G and the like. A spacer 140' is disposed between the first feed element 131 and the second feed element 132.

A metal area 1111 is disposed on the display screen of the mobile phone. In the embodiment, the metal area 1111 may be a metal plate below the display screen. A circuit board 170 is disposed below the metal plate, and a card holder 180 for inserting a communication card (SIM card) therein is disposed on the circuit board 170.

A bottom plate 121 of the housing of the mobile phone is disposed below the circuit board 170. If the bottom plate 121 is made of metallic materials, the circuit board 170 may be connected with the bottom plate 121, so as to realize the circuit grounding return of the circuit board 170 and the card holder 180. If the bottom plate 121 is made of non-metallic materials, a metal plate disposed in the housing, for example, a metal plate 160 for supporting various electronic components, may be taken as a grounding point to realize the circuit grounding return of the circuit board 170 and the card holder 180.

The distance between the metal area 1111 and the bottom frame may be less than or equal to 0.8 mm, so as to effectively improve the screen-to-body ratio. In the exemplary embodiment of the present invention, the adoption of the three-direction elastic plate type spacer 140', namely the first elastic plate 141', the second elastic plate 142' and the third elastic plate 143' which are sequentially connected, not only realizes high screen-to-body ratio but also ensures the signal receiving sensitivity of the antenna 100.

In such embodiment, the first elastic plate 141' is connected with the end plate 1221, the second elastic plate 142' is connected with the metal area 1111, and the third elastic plate 143' is connected with the card holder 180, so as to realize the grounding return of the feed 130 connected with the end plate 1221 as soon as possible. The three-direction elastic plate type spacer 140' improves the isolation effect of the first feed element 131 and the second feed element 132 of the feed 130. The isolation of the first feed element 131 and the second feed element 132 can reach more than -10dB in the case of ensuring good contact between the first and second feed element 131 and 132 and the end plate 1221.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A mobile terminal, comprising:
an antenna (100); and
a housing including an upper housing (110) and a lower housing (120);
wherein the lower housing (120) includes a bottom plate (121);
the upper housing (110) includes a panel (111) provided with a metal area (1111); and
the first member (122) of the antenna (100) is connected with the bottom plate (121);
wherein the antenna comprises:
a feed (130) including a first feed element (131) and a second feed element (132);
a first member (122) composed of metallic materials and including an end plate (1221) having at least two sides and side wall plates (1222) disposed on both sides of the end plate (1221), wherein the first feed element (131) and the second feed element (132) of the feed (130) are disposed on the end plate (1221) of the first member (122), and slots (123) are formed on at least one of the side wall plates (1222) of the first member (122); and
second members (112) composed of non-metallic materials and disposed to cover the first member (122) such that the slots (123) are shielded;
being **characterized in that** a spacer (140) for avoiding the signal interference between the first feed element (131) and the second feed element (132) is disposed between the first feed element (131) and the second feed element (132);
the spacer (140) of the antenna (100) is a ribbed plate connected between the end plate (1221) of the antenna (100) and the bottom plate (121).

2. The mobile terminal of claim 1, being **characterized in that**:
distance between the metal area (1111) of the panel (111) and the end plate (1221) of the antenna (100) is less than or equal to 1 mm.

3. The mobile terminal of claim 1, being **characterized in that**:
distance between the metal area (1111) of the panel (111) and the end plate (1221) of the antenna (100) is less than or equal to 0.8 mm.

4. The mobile terminal according to any one of claims 1 to 3, being **characterized in that**:
a first grounding point (150) is disposed on the two side wall plates (1222) respectively;
the slot (123) is disposed between the first grounding point (150) and a connecting end of the side wall plate (1222) with the end plate (1221); or, the slot (123) is arranged away from the first grounding point (150) relative to a connecting end of the side wall plate (1222) and the end plate (1221).

5. The mobile terminal according to claim 4, being **characterized in that**:
the metal area (1111) is electrically connected with the first grounding point (150) of the antenna (100) through conductive silicone adhesive or conductive foam; and
a circuit board (170) of the mobile terminal is electrically connected with a second grounding point (150') through a grounding elastic sheet.

6. A mobile terminal, comprising:
an antenna (100); and
a housing including an upper housing (110) and a lower housing (120);
wherein the lower housing (120) includes a bottom plate (121);
the upper housing (110) includes a panel (111) provided with a metal area (1111); and
the first member (122) of the antenna (100) is connected with the bottom plate (121);
wherein the antenna comprises:
a feed (130) including a first feed element (131) and a second feed element (132);
a first member (122) composed of metallic materials and including an end plate (1221) having at least two sides and side wall plates (1222) disposed on both sides of the end plate (1221), wherein the first feed element (131) and the second feed element (132) of the feed (130) are disposed on the end plate (1221) of the first member (122), and slots (123) are formed on at least one of the side wall plates (1222) of the first member (122); and
second members (112) composed of non-metallic materials and disposed to cover the first member (122) such that the slots (123) are shielded;
being **characterized in that** a spacer (140') for avoiding the signal interference between the first feed element (131) and the second feed element (132) is disposed between the first feed element (131) and the second feed element (132);
the spacer (140') of the antenna (100) is a three-direction elastic plate type spacer which is connected to the end plate (1221) of the antenna (100), a card holder (180) of the mobile terminal, and the metal area (1111) of the panel (111) of the upper housing (110) respectively.

7. The mobile terminal of claim 6, being **characterized in that**:
distance between the metal area (1111) of the panel (111) and the end plate (1221) of the antenna (100) is less than or equal to 1 mm.

8. The mobile terminal of claim 6, being **characterized in that**:
distance between the metal area (1111) of the panel (111) and the end plate (1221) of the antenna (100) is less than or equal to 0.8 mm.

9. The mobile terminal of any one of claims 6 to 8, being **characterized in that**:
the mobile terminal further includes a circuit board (170) which is grounded through a second grounding point (150'); and
the card holder (180) is disposed between the circuit board (170) and the panel (111) and arranged close to the circuit board (170).

10. The mobile terminal of claim 6, being **characterized in that**:
the three-direction elastic plate type spacer includes a first elastic plate (141') extended along a first direction, a second elastic plate (142') extended along a second direction different from the first direction, and a third elastic plate (143') extended along a third direction different from the second direction; and
the first elastic plate (141'), the second elastic plate (142') and the third elastic plate (143') are respectively connected to one of the end plate (1221) of the antenna (100), the card holder (180) of the mobile terminal, and the metal area (1111) of the panel (111) of the upper housing (110).

11. The mobile terminal of claim 6, being **characterized in that**:
the three-direction elastic plate type spacer includes a first elastic plate (141') extended along a first direction, a second elastic plate (142') extended along a second direction different from the first direction, and a third elastic plate (143') extended along a third direction different from the second direction; and
an angle formed by the first elastic plate (141') and the second elastic plate (142') is different from an angle formed by the second elastic plate (142') and the third elastic plate (143').

12. The mobile terminal of claim 6, being **characterized in that**:
the three-direction elastic plate type spacer includes a first elastic plate (141'), a second elastic plate (142') and a third elastic plate (143') which are sequentially connected;
preset angles are formed respectively between the first elastic plate (141') and the second elastic plate (142') and between the second elastic plate (142') and the third elastic plate (143');
the first elastic plate (141') is connected with the end plate (1221) of the antenna (100);
the second elastic plate (142') is connected with the metal area (1111) of the panel (111); and
the third elastic plate (143') is connected with a card holder (180) of the mobile terminal.

13. The mobile terminal of claim 12, being **characterized in that**:
the angle between the first elastic plate (141') and the second elastic plate (142') is an obtuse angle; and
the angle between the second elastic plate (142') and the third elastic plate (143') is an acute angle.

14. The mobile terminal according to any one of claims 1 to 13, being **characterized in that**:
a first grounding point (150) is disposed on the two side wall plates (1222) respectively;
the slot (123) is disposed between the first grounding point (150) and a connecting end of the side wall plate (1222) with the end plate (1221); or, the slot (123) is arranged away from the first grounding point (150) relative to a connecting end of the side wall plate (1222) and the end plate (1221).

15. The mobile terminal according to claim 14, being **characterized in that**:
the metal area (1111) is electrically connected with the first grounding point (150) of the antenna (100) through conductive silicone adhesive or conductive foam; and
a circuit board (170) of the mobile terminal is electrically connected with a second grounding point (150') through a grounding elastic sheet.

## Patentansprüche

1. Mobiles Endgerät mit:
einer Antenne (100); und
einem Gehäuse mit einem oberen Gehäuse (110) und einem unteren Gehäuse (120);
wobei das untere Gehäuse (120) eine Bodenplatte (121) aufweist;
das obere Gehäuse (110) eine mit einem Metallbereich (1111) versehene Platte (111) aufweist; und
das erste Element (122) der Antenne (100) mit der Bodenplatte (121) verbunden ist;
wobei die Antenne aufweist:
eine Zuleitung (130) mit einem ersten Zuleitungselement (131) und einem zweiten Zuleitungselement (132):
ein erstes Element (122), das aus metallischen Materialien besteht und eine Endplatte (1221) mit mindestens zwei Seiten und Seitenwandplatten (1222), die zu beiden Seiten der Endplatte (1221) angeordnet sind, aufweist, wobei das erste Zuleitungselement (131) und das zweite Zuleitungselement (132) der Zuleitung (130) an der Endplatte (1221) des ersten Elements (122) angeordnet sind, und Schlitze (123) in mindestens einer der Seitenwandplatten (1222) des ersten Elements (122) ausgebildet sind; und
zweite Elemente (112), die aus nicht metallischen Materialien bestehen und angeordnet sind, um das erste Element (122) derart abzudecken, dass die Schlitze (123) abgeschirmt sind;
**dadurch gekennzeichnet, dass** ein Abstandhalter (140) zur Vermeidung einer Signalinterferenz zwischen dem ersten Zuleitungselement (131) und dem zweiten Zuleitungselement (132) zwischen dem ersten Zuleitungselement (131) und dem zweiten Zuleitungselement (132) angeordnet ist;
der Abstandhalter (140) der Antenne (100) eine gerippte Platte ist, die zwischen der Endplatte (1221) der Antenne (100) und der Bodenplatte (121) verbunden ist.

2. Mobiles Endgerät nach Anspruch 1, **dadurch gekennzeichnet, dass**:
der Abstand zwischen dem Metallbereich (1111) der Platte (111) und der Endplatte (1221) der Antenne (100) kleiner als oder gleich 1 mm ist.

3. Mobiles Endgerät nach Anspruch 1, **dadurch gekennzeichnet, dass**:
der Abstand zwischen dem Metallbereich (1111) der Platte (111) und der Endplatte (1221) der Antenne (100) kleiner als oder gleich 0,8 mm ist.

4. Mobiles Endgerät nach einem der Ansprüche 1 bis 3, **dadurch gekennzeichnet, dass**:
ein erster Erdungspunkt (150) jeweils an den beiden Seitenwandplatten (1222) angeordnet ist;
der Schlitz (123) zwischen dem ersten Erdungspunkt (150) und einem Verbindungsende der Seitenwandplatte (1222) mit der Endplatte (1221) angeordnet ist; oder der Schlitz (123) in Bezug auf ein Verbindungsende der Seitenwandplatte (1222) mit der Endplatte (1221) von dem ersten Erdungspunkt (150) entfernt angeordnet ist.

5. Mobiles Endgerät nach Anspruch 4, **dadurch gekennzeichnet, dass**:
der Metallbereich (1111) elektrisch mit dem ersten Erdungspunkt (150) der Antenne (100) durch leitfähigen Silikonkleber oder leitfähigen Schaum verbunden ist; und
eine Platine (170) des mobilen Endgeräts elektrisch mit einem zweiten Erdungspunkt (150') durch eine elastische Erdungsbahn verbunden ist.

6. Mobiles Endgerät mit:
einer Antenne (100); und
einem Gehäuse mit einem oberen Gehäuse (110) und einem unteren Gehäuse (120);
wobei das untere Gehäuse (120) eine Bodenplatte (121) aufweist;
das obere Gehäuse (110) eine mit einem Metallbereich (1111) versehene Platte (111) aufweist; und
das erste Element (122) der Antenne (100) mit der Bodenplatte (121) verbunden ist;
wobei die Antenne aufweist:
eine Zuleitung (130) mit einem ersten Zuleitungselement (131) und einem zweiten Zuleitungselement (132):
ein erstes Element (122), das aus metallischen Materialien besteht und eine Endplatte (1221) mit mindestens zwei Seiten und Seitenwandplatten (1222), die zu beiden Seiten der Endplatte (1221) angeordnet sind, aufweist, wobei das erste Zuleitungselement (131) und das zweite Zuleitungselement (132) der Zuleitung (130) an der Endplatte (1221) des ersten Elements (122) angeordnet sind, und Schlitze (123) in mindestens einer der Seitenwandplatten (1222) des ersten Elements (122) ausgebildet sind; und
zweite Elemente (112), die aus nicht metallischen Materialien bestehen und angeordnet sind, um das erste Element (122) derart abzudecken, dass die Schlitze (123) abgeschirmt sind;
**dadurch gekennzeichnet, dass** ein Abstandhalter (140') zur Vermeidung einer Signalinterferenz zwischen dem ersten Zuleitungselement (131) und dem zweiten Zuleitungselement (132) zwischen dem ersten Zuleitungselement (131) und dem zweiten Zuleitungselement (132) angeordnet ist;
der Abstandhalter (140') der Antenne (100) ein Abstandhalter vom Typ einer in drei Richtungen elastischen Platte ist, der jeweils mit der Endplatte (1221) der Antenne (100), einem Kartenhalter (180) des mobilen Endgeräts und dem Metallbereich (1111) der Platte (111) des oberen Gehäuses (110) verbunden ist.

7. Mobiles Endgerät nach Anspruch 6, **dadurch gekennzeichnet, dass**:
der Abstand zwischen dem Metallbereich (1111) der Platte (111) und der Endplatte (1221) der Antenne (100) kleiner als oder gleich 1 mm ist.

8. Mobiles Endgerät nach Anspruch 6, **dadurch gekennzeichnet, dass**:
der Abstand zwischen dem Metallbereich (1111) der Platte (111) und der Endplatte (1221) der Antenne (100) kleiner als oder gleich 0,8 mm ist.

9. Mobiles Endgerät nach einem der Ansprüche 6 bis 8, **dadurch gekennzeichnet, dass**:
das mobile Endgerät ferner eine Platine (170) aufweist, die über einen zweiten Erdungspunkt (150') geerdet ist; und
der Kartenhalter (180) zwischen der Platine (170) und der Platte (111) und nahe der Platine (170) angeordnet ist.

10. Mobiles Endgerät nach Anspruch 6, **dadurch gekennzeichnet, dass**:
der Abstandhalter vom Typ einer in drei Richtungen elastischen Platte eine erste elastische Platte (141'), die sich entlang einer ersten Richtung erstreckt, eine zweite elastische Platte (142'), die sich entlang einer zweiten Richtung, die von der ersten Richtung verschieden ist, erstreckt, und eine dritte elastische Platte (143') aufweist, die sich entlang einer dritten Richtung, die von der ersten und der zweiten Richtung verschieden ist, erstreckt; und
die erste elastische Platte (141'), die zweite elastische Platte (142') und die dritte elastische Platte (143') mit der Endplatte (1221) der Antenne (100) bzw. dem Kartenhalter (180) des mobilen Endgeräts bzw. dem Metallbereich (1111) der Platte (111) des oberen Gehäuses (110) verbunden ist.

11. Mobiles Endgerät nach Anspruch 6, **dadurch gekennzeichnet, dass**:
der Abstandhalter vom Typ einer in drei Richtungen elastischen Platte eine erste elastische Platte (141'), die sich entlang einer ersten Richtung erstreckt, eine zweite elastische Platte (142'), die sich entlang einer zweiten Richtung, die von der ersten Richtung verschieden ist, erstreckt, und eine dritte elastische Platte (143') aufweist, die sich entlang einer dritten Richtung, die von der ersten und der zweiten Richtung verschieden ist, erstreckt; und
ein von der ersten elastischen Platte (141') und der zweiten elastischen Platte (142') gebildeter Winkel von einem von der zweiten elastischen Platte (142') und der dritten elastischen Platte (143') gebildeten Winkel verschieden ist.

12. Mobiles Endgerät nach Anspruch 6, **dadurch gekennzeichnet, dass**:
der Abstandhalter vom Typ einer in drei Richtungen elastischen Platte eine erste elastische Platte (141'), eine zweite elastische Platte (142'), und eine dritte elastische Platte (143') aufweist, die sequentiell verbunden sind;
vorgegebene Winkel jeweils zwischen der ersten elastischen Platte (141') und der zweiten elastischen Platte (142') und zwischen der zweiten elastischen Platte (142') und der dritten elastischen Platte (143') gebildet sind;
die erste elastische Platte (141') mit der Endplatte (1221) der Antenne (100) verbunden ist;
die zweite elastische Platte (142') mit dem Metallbereich (1111) der Platte (111) verbunden ist; und
die dritte elastische Platte (143') mit einem Kartenhalter (180) des mobilen Endgeräts verbunden ist.

13. Mobiles Endgerät nach Anspruch 12, **dadurch gekennzeichnet, dass**:
der Winkel zwischen der ersten elastischen Platte (141') und der zweiten elastischen Platte (142') ein stumpfer Winkel ist; und
der Winkel zwischen der zweiten elastischen Platte (142') und der dritten elastischen Platte (143') ein spitzer Winkel ist.

14. Mobiles Endgerät nach einem der Ansprüche 1 bis 13, **dadurch gekennzeichnet, dass**:
ein erster Erdungspunkt (150) jeweils an den beiden Seitenwandplatten (1222) angeordnet ist;
der Schlitz (123) zwischen dem ersten Erdungspunkt (150) und einem Verbindungsende der Seitenwandplatte (1222) mit der Endplatte (1221) angeordnet ist; oder der Schlitz (123) in Bezug auf ein Verbindungsende der Seitenwandplatte (1222) mit der Endplatte (1221) von dem ersten Erdungspunkt (150) entfernt angeordnet ist.

15. Mobiles Endgerät nach Anspruch 14, **dadurch gekennzeichnet, dass**:
der Metallbereich (1111) elektrisch mit dem ersten Erdungspunkt (150) der Antenne (100) durch leitfähigen Silikonkleber oder leitfähigen Schaum verbunden ist; und
eine Platine (170) des mobilen Endgeräts elektrisch mit einem zweiten Erdungspunkt (150') durch eine elastische Erdungsbahn verbunden ist.

## Revendications

1. Terminal mobile, comprenant :
une antenne (100) ; et
un boîtier comportant un boîtier supérieur (110) et un boîtier inférieur (120) ;
dans lequel le boîtier inférieur (120) comporte une plaque inférieure (121) ;
le boîtier supérieur (110) comporte un panneau (111) pourvu d'une zone métallique (1111) ; et
le premier élément (122) de l'antenne (100) est connecté à la plaque inférieure (121) ;
dans lequel l'antenne comprend :
une alimentation (130) comportant un premier élément d'alimentation (131) et un second élément d'alimentation (132) ;
un premier élément (122) composé de matériaux métalliques et comportant une plaque d'extrémité (1221) ayant au moins deux côtés et des plaques de paroi latérale (1222) disposées des deux côtés de la plaque d'extrémité (1221), dans lequel le premier élément d'alimentation (131) et le second élément d'alimentation (132) de l'alimentation (130) sont disposés sur la plaque d'extrémité (1221) du premier élément (122), et des fentes (123) sont formées sur au moins l'une des plaques de paroi latérale (1222) du premier élément (122) ; et
des seconds éléments (112) composés de matériaux non métalliques et disposés pour couvrir le premier élément (122) de telle sorte que les fentes (123) sont blindées ;
**caractérisé en ce qu'**une entretoise (140) pour éviter l'interférence de signal entre le premier élément d'alimentation (131) et le second élément d'alimentation (132) est disposée entre le premier élément d'alimentation (131) et le second élément d'alimentation (132) ;
l'entretoise (140) de l'antenne (100) est une plaque nervurée connectée entre la plaque d'extrémité (1221) de l'antenne (100) et la plaque de fond (121).

2. Terminal mobile selon la revendication 1, **caractérisé en ce que** :
une distance entre la zone métallique (1111) du panneau (111) et la plaque d'extrémité (1221) de l'antenne (100) est inférieure ou égale à 1 mm.

3. Terminal mobile selon la revendication 1, **caractérisé en ce que** :
une distance entre la zone métallique (1111) du panneau (111) et la plaque d'extrémité (1221) de l'antenne (100) est inférieure ou égale à 0,8 mm.

4. Terminal mobile selon l'une quelconque des revendications 1 à 3, **caractérisé en ce que** :
un premier point de mise à la terre (150) est disposé sur les deux plaques de paroi latérale (1222) respectivement ;
la fente (123) est disposée entre le premier point de mise à la terre (150) et une extrémité de connexion de la plaque de paroi latérale (1222) avec la plaque d'extrémité (1221) ; ou
la fente (123) est disposée à l'écart du premier point de mise à la terre (150) par rapport à une extrémité de connexion de la plaque de paroi latérale (1222) et de la plaque d'extrémité (1221).

5. Terminal mobile selon la revendication 4, **caractérisé en ce que** :
la zone métallique (1111) est connectée électriquement au premier point de mise à la terre (150) de l'antenne (100) par l'intermédiaire d'un adhésif de silicone conducteur ou
d'une mousse conductrice ; et
une carte de circuit imprimé (170) du terminal mobile est connectée électriquement à un second point de mise à la terre (150') par l'intermédiaire d'une feuille élastique de mise à la terre.

6. Terminal mobile, comprenant :
une antenne (100) ; et
un boîtier comportant un boîtier supérieur (110) et un boîtier inférieur (120) ;
dans lequel le boîtier inférieur (120) comporte une plaque inférieure (121) ;
le boîtier supérieur (110) comporte un panneau (111) pourvu d'une zone métallique (1111) ; et
le premier élément (122) de l'antenne (100) est connecté à la plaque inférieure (121) ;
dans lequel l'antenne comprend :
une alimentation (130) comportant un premier élément d'alimentation (131) et un second élément d'alimentation (132) ;
un premier élément (122) composé de matériaux métalliques et comportant une plaque d'extrémité (1221) ayant au moins deux côtés et des plaques de paroi latérale (1222) disposées des deux côtés de la plaque d'extrémité (1221), dans lequel le premier élément d'alimentation (131) et le second élément d'alimentation (132) de l'alimentation (130) sont disposés sur la plaque d'extrémité (1221) du premier élément (122), et des fentes (123) sont formées sur au moins l'une des plaques de paroi latérale (1222) du premier élément (122) ; et
des seconds éléments (112) composés de matériaux non métalliques et disposés pour couvrir le premier élément (122) de telle sorte que les fentes (123) sont blindées ;
**caractérisé en ce qu'**une entretoise (140') pour éviter l'interférence de signal entre le premier élément d'alimentation (131) et le second élément d'alimentation (132) est disposée entre le premier élément d'alimentation (131) et le second élément d'alimentation (132) ;
l'entretoise (140') de l'antenne (100) est une entretoise de type plaque élastique à trois directions qui est connectée à la plaque d'extrémité (1221) de l'antenne (100), à un porte-carte (180) du terminal mobile, et à la zone métallique (1111) du panneau (111) du boîtier supérieur (110) respectivement.

7. Terminal mobile selon la revendication 6, **caractérisé en ce que** :
une distance entre la zone métallique (1111) du panneau (111) et la plaque d'extrémité (1221) de l'antenne (100) est inférieure ou égale à 1 mm.

8. Terminal mobile selon la revendication 6, **caractérisé en ce que** :
une distance entre la zone métallique (1111) du panneau (111) et la plaque d'extrémité (1221) de l'antenne (100) est inférieure ou égale à 0,8 mm.

9. Terminal mobile selon l'une quelconque des revendications 6 à 8, **caractérisé en ce que** :
le terminal mobile comporte en outre une carte de circuit imprimé (170) qui est mise à la terre par un second point de mise à la terre (150') ; et
le porte-carte (180) est disposé entre la carte de circuit imprimé (170) et le panneau (111) et disposé à proximité de la carte de circuit imprimé (170).

10. Terminal mobile selon la revendication 6, **caractérisé en ce que** :
l'entretoise de type plaque élastique à trois directions comporte une première plaque élastique (141') s'étendant le long d'une première direction, une deuxième plaque élastique (142') s'étendant le long d'une deuxième direction différente de la première direction, et une troisième plaque élastique (143') s'étendant le long d'une troisième direction différente de la deuxième direction ; et
la première plaque élastique (141'), la deuxième plaque élastique (142') et la troisième plaque élastique (143') sont respectivement connectées à l'une des plaques d'extrémité (1221) de l'antenne (100), le porte-carte (180) du terminal mobile, et la zone métallique (1111) du panneau (111) du boîtier supérieur (110).

11. Terminal mobile selon la revendication 6, **caractérisé en ce que** :
l'entretoise de type plaque élastique à trois directions comporte une première plaque élastique (141') s'étendant le long d'une première direction, une deuxième plaque élastique (142') s'étendant le long d'une deuxième direction différente de la première direction, et une troisième plaque élastique (143') s'étendant le long d'une troisième direction différente de la deuxième direction ; et
un angle formé par la première plaque élastique (141') et la deuxième plaque élastique (142') est différent d'un angle formé par la deuxième plaque élastique (142') et la troisième plaque élastique (143').

12. Terminal mobile selon la revendication 6, **caractérisé en ce que** :
l'entretoise de type plaque élastique à trois directions comporte une première plaque élastique (141'), une deuxième plaque élastique (142') et une troisième plaque élastique (143') qui sont connectées séquentiellement ;
des angles prédéfinis sont formés respectivement entre la première plaque élastique (141') et la deuxième plaque élastique (142') et entre la deuxième plaque élastique (142') et la troisième plaque élastique (143') ;
la première plaque élastique (141') est connectée à la plaque d'extrémité (1221) de l'antenne (100) ;
la deuxième plaque élastique (142') est connectée à la zone métallique (1111) du panneau (111) ; et
la troisième plaque élastique (143') est connectée à un porte-carte (180) du terminal mobile.

13. Terminal mobile selon la revendication 12, **caractérisé en ce que** :
l'angle entre la première plaque élastique (141') et la deuxième plaque élastique (142') est un angle obtus ; et
l'angle entre la deuxième plaque élastique (142') et la troisième plaque élastique (143') est un angle aigu.

14. Terminal mobile selon l'une quelconque des revendications 1 à 13, **caractérisé en ce que** :
un premier point de mise à la terre (150) est disposé sur les deux plaques de paroi latérale (1222) respectivement ;
la fente (123) est disposée entre le premier point de mise à la terre (150) et une extrémité de connexion de la plaque de paroi latérale (1222) avec la plaque d'extrémité (1221) ; ou la fente (123) est disposée à l'écart du premier point de mise à la terre (150) par rapport à une extrémité de connexion de la plaque de paroi latérale (1222) et de la plaque d'extrémité (1221).

15. Terminal mobile selon la revendication 14, **caractérisé en ce que** :
la zone métallique (1111) est connectée électriquement au premier point de mise à la terre (150) de l'antenne (100) par l'intermédiaire d'un adhésif de silicone conducteur ou
d'une mousse conductrice ; et une carte de circuit imprimé (170) du terminal mobile est connectée électriquement à un second point de mise à la terre (150') par l'intermédiaire d'une couche élastique de mise à la terre.
